# EUROPÄISCHE PATENTSCHRIFT

(11) **EP 3 363 751 B1**
(45) Veröffentlichungstag und Bekanntmachung des Hinweises auf die Patenterteilung: **22.04.2020**
(21) Anmeldenummer: 18176080.2
(22) Anmeldetag: 05.06.2018
(51) Int. Cl.: B60L 13/03, B60L 15/00, B65G 54/02, B60L 13/00, B60L 15/20

(54) **VERFAHREN ZUR ÜBERGABE EINER TRANSPORTEINHEIT EINES LANGSTATORLINEARMOTORS AN EINER ÜBERGABEPOSITION**
METHOD FOR TRANSFERING A TRANSPORT UNIT OF A LINEAR MOTOR CONVEYOR TO A TRANSFER POSITION
PROCÉDÉ DE TRANSFERT D'UNE UNITÉ DE TRANSPORT D'UN CONVOYEUR À MOTEUR LINÉAIRE À UNE POSITION DE TRANSFERT

(43) Veröffentlichungstag der Anmeldung: 22.08.2018
(73) Patentinhaber: B&R Industrial Automation GmbH, 5142 Eggelsberg (AT)
(72) Erfinder: Weber, Andreas, 5020 Salzburg (AT); Forthuber, Friedrich, 5144 Handenberg (AT)
(74) Vertreter: Patentanwälte Pinter & Weiss OG

(56) Entgegenhaltungen:
- EP-A1- 3 109 998
- EP-A1- 3 251 986
- DE-U- 6 945 125
- US-A- 3 845 720

## Beschreibung

Die gegenständliche Erfindung betrifft ein Verfahren zur Übergabe einer Transporteinheit eines Langstatorlinearmotors an einer Übergabeposition von einem ersten Transportabschnitt, mit einer Anzahl von in Bewegungsrichtung der Transporteinheit hintereinander angeordneten Antriebsspulen im Bereich der Übergabeposition, an einen zweiten Transportabschnitt, mit einer Anzahl von in Bewegungsrichtung der Transporteinheit hintereinander angeordneten Antriebsspulen im Bereich der Übergabeposition, wobei an jeder Seite der Transporteinheit Erregungsmagnete angeordnet sind, die zum Bewegen der Transporteinheit in die Bewegungsrichtung mit Antriebsspulen im Bereich der Transporteinheit zusammenwirken, indem durch Einprägen eines Statorstromes in Antriebsspulen ein elektromagnetisches Feld erzeugt wird, das mit Erregungsmagneten an der Transporteinheit zusammenwirkt und in einem Übergabebereich der Übergabeposition an zumindest einer Seite der Transporteinheit in zumindest eine Antriebsspule ein Statorstrom eingeprägt wird, der aufgrund einer vortriebskraftbildenden Stromkomponente und/oder einer seitenkraftbildenden Stromkomponente des Statorstromes eine Lenkwirkung auf die Transporteinheit erzeugt.

In so gut wie allen modernen Produktionsanlagen ist es erforderlich, Bauteile oder Komponenten, auch über längere Transportstrecken hinweg, mit Transporteinrichtungen zwischen einzelnen Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Bei einem Langstatorlinearmotor ist eine Vielzahl von elektrischen Antriebsspulen, die den Stator bilden, entlang einer Transportstrecke angeordnet. Auf einer Transporteinheit ist eine Anzahl von Erregungsmagneten, entweder als Permanentmagnete oder als elektrische Spule oder Kurzschlusswicklung, angeordnet, die mit den Antriebsspulen zusammenwirken. Der Langstatorlinearmotor kann als Synchronmaschine, sowohl selbsterregt oder fremderregt, oder als Asynchronmaschine ausgeführt sein. Durch Ansteuerung der einzelnen Antriebsspulen im Bereich einer Transporteinheit, zur Regelung des erzeugten magnetischen Flusses, wird im Zusammenwirken mit den Erregungsmagneten der Transporteinheit eine Vortriebskraft erzeugt und die Transporteinheit kann entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können. Ein Langstatorlinearmotor zeichnet sich insbesondere durch eine bessere und flexiblere Ausnützung über den gesamten Arbeitsbereich der Bewegung (Geschwindigkeit, Beschleunigung), eine individuelle Regelung/Steuerung der Bewegung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes aus. Beispiele solcher Langstatorlinearmotoren können der WO 2013/143783 A1, der US 6,876,107 B2, der US 2013/0074724 A1 oder der WO 2004/103792 A1 entnommen werden.

In der US 2013/0074724 A1 und der WO 2004/103792 A1 sind die Antriebsspulen des Stators an der Oberseite der Transportstrecke angeordnet. Die Permanentmagnete sind an der Unterseite der Transporteinheiten angeordnet. In der WO 2013/143783 A1 und der US 6,876,107 B2 sind die Permanentmagnete an beiden Seiten der zentral angeordneten Antriebsspulen vorgesehen, womit die Permanentmagnete den Stator des Langstatorlinearmotors umgeben und die Antriebsspulen mit den beidseitig angeordneten Permanentmagneten zusammenwirken.

Die Führung der Transporteinheiten entlang der Transportstrecke erfolgt entweder durch Führungsrollen, wie beispielsweise in der WO 2013/143783 A1 oder der US 6,876,107 B2, oder durch magnetische Führung, wie beispielsweise in der WO 2004/103792 A1. Im Falle der magnetischen Führung sind an den Transporteinheiten beidseitig Führungsmagnete vorgesehen, die mit gegenüber an der Transportstrecke angeordneten Führungsstäben zusammenwirken. Die Führungsstäbe bilden dabei ein magnetisches Joch aus, die den magnetischen Kreis der Führungsmagnete schließen. Die damit gebildeten magnetischen Führungskreise wirken damit einer seitlichen Bewegung der Transporteinheiten entgegen, womit die Transporteinheiten seitlich geführt werden. Eine ähnliche magnetische Seitenführung kann auch der US 6,101,952 A entnommen werden.

Auch Khong, P.C., et al., "Magnetic Guidance of the Mover in a Long-Primary Linear Motor", IEEE Transactions on Industry Applications, Vo.47, No.3, May/June 2011, S.1319-1327 beschreibt eine magnetische Führung einer Transporteinheit eines Langstatorlinearmotors. Hierbei werden durch die Statorströme Seitenkräfte erzeugt, die einer Abweichung der Transporteinheit von einer Referenzposition in Seitenrichtung entgegenwirken, um die Transporteinheit zur Führung in Referenzposition zu halten.

In vielen Transporteinrichtungen sind auch Übergabepositionen, z.B. in Form von Weichen oder Übergabestellen von zweiseitigen Streckenabschnitten auf einseitige Streckenabschnitte, notwendig, um komplexe und intelligente Bahnplanungen bzw. Bahnrealisierungen der Transporteinrichtung zu ermöglichen. Diese Übergabepositionen wurden bisher oftmals mithilfe zusätzlicher mechanischer Auslöseeinheiten realisiert. Ein Beispiel dafür findet sich in der US 2013/0074724 A1 in Form einer mechanisch ausgelösten Weiche mittels beweglicher Umlenkarmen oder eines Drehteller.

Es sind aber auch schon Transporteinrichtungen bekannt geworden, in denen zusätzliche elektrische Hilfsspulen verwendet werden, um eine Weichenauslösung zu realisieren. In der US 6,101,952 A sind die Hilfsspulen beispielsweise am magnetischen Joch des magnetischen Führungskreises angeordnet, während die Hilfsspulen in der US 2013/0074724 A1 seitlich an der Transportstrecke angeordnet sind. In beiden Fällen wird durch die Hilfsspulen in den magnetischen Führungskreis ein magnetischer Fluss eingeprägt, der eine seitliche Kraft erzeugt, die die Transporteinheit in eine Richtung lenkt. Durch die zusätzlich notwendigen Hilfsspulen erhöht sich aber der Aufwand für die Umsetzung einer Transporteinrichtungen, da die Hilfsspulen zusätzlich verbaut und elektrisch versorgt und angesteuert werden müssen. Zusätzlich sind dazu auch separate Führungsmagnete an den Transporteinheiten erforderlich.

In der DE 1 963 505 A1, der WO 2015/036302 A1 und der WO 2015/042409 A1 sind magnetisch aktivierte Weichen eines Langstatorlinearmotors beschrieben, die ohne zusätzliche Hilfsspulen auskommen. Bei diesen Langstatorlinearmotoren sind die Erregungsmagnete der Transporteinheiten zwischen beidseitig angeordneten Antriebsspulen angeordnet. Im Bereich einer Weiche kann durch Bestromung der Antriebsspulen auf nur einer Seite der Transportstrecke eine Seitenkraft erzeugt werden, mit der die Transporteinheit im Bereich der Weiche gelenkt werden kann, um die Transporteinheit nach der Weiche auf der gewünschten Transportstrecke weiterzubewegen. Die Weichenauslösung erfolgt dabei derart, dass die Antriebsspulen im Bereich der Weiche nur auf der Seite der Transportstrecke aktiviert werden, entlang der sich die Transporteinheit weiterbewegen soll. Die Antriebsspulen der anderen Seite werden deaktiviert (DE 1 963 505 A1, WO 2015/036302 A1) oder umgepolt (WO 2015/036302 A1). Das bringt aber gewisse Probleme mit sich. Werden die Antriebsspulen einer Seite im Bereich der Weiche zu Steuerung lediglich deaktiviert, verliert die Transporteinheit im Bereich der Weiche die Hälfte der Vortriebskraft, womit der Bereich der Weiche nur mit einer reduzierten Geschwindigkeit durchfahren werden kann. Im Bereich der Weiche könnte es damit zu Stauungen der Transporteinheiten kommen, was für die Steuerung der Transporteinrichtung ungünstig wäre. Das Umpolen wiederum ist rein statisch und es kann eine bestimmte, vorgegebene Seitenkraft aktiviert oder deaktiviert werden. Durch Umpolen kann somit im Bereich der Weiche eine bestimmte, vorgegebene Seitenkraft eingestellt werden. Wird die Seitenkraft aus Gründen der Sicherheit in der Weichenfahrt überdimensioniert so führt das zu erhöhter Reibung und erhöhtem Verschleiß. Die Transporteinheiten müssten damit mechanisch entsprechend dimensioniert werden, was die Transporteinheiten vergrößert, schwerer und teurer macht. Abgesehen davon erhöht sich damit auch der Verschleiß der mechanischen Komponenten der Transporteinheiten, insbesondere der mechanischen Führungselementen. Wird die Seitenkraft hingegen kleiner gewählt, so wird dadurch die Sicherheit der Weichenfahrt verringert, beispielsweise wenn die Transporteinheit mit Last doch schwerer als angenommen ist. Damit ist auch das Umpolen zur Weichenauslösung für den Betrieb eines Langstatorlinearmotors eher nachteilig.

Aus der EP 3 109 998 A1 ist wiederum eine mit den Antriebsspulen des Langstatorlinearmotors elektromagnetisch aktivierte Weichenauslösung nach dem Oberbegriff des Anspruchs 1 bekannt. Dabei wird im Übergabebereich einer Übergabeposition in einer Antriebsspule einer Seite ein Statorstrom eingeprägt, der zur Erzeugung einer Lenkwirkung eine auf die Transporteinheit wirkende vortriebskraftbildende Kraftkomponente und/oder eine seitenkraftbildende Kraftkomponente erzeugt, wobei diese Lenkwirkung der der Vortriebsbewegung dienenden, auf die Transporteinheit wirkenden Vortriebskraft überlagert wird. Nachdem natürlich auch die Vortriebskraft durch den Statorstrom erzeugt wird, muss der Statorstrom sowohl die Vortriebskraft erzeugen, als auch die Lenkwirkung. Der Leistungsteil des Langstatorlinearmotors, der die Antriebsspulen bestromt, ist aber leistungsmäßig begrenzt, kann also nur einen bestimmten maximalen Strom bereitstellen. Somit kann der verfügbare Strom, zumindest im Übergabebereich, nicht zur Gänze für die Erzeugung der Vortriebskraft genutzt werden. Nachdem üblicherweise auch keine Sprünge in der Vortriebskraft erwünscht sind (was zu Beschleunigungssprünge oder Rucksprüngen führen kann), beschränkt das aber auch den für die Vortriebskraft verfügbaren Strom außerhalb des Übergabebereichs. Man könnte zur Behebung dieses Problems natürlich den Leistungsteil leistungsmäßig verstärken, um größere Ströme zu ermöglichen. Nachdem aber in einem Langstatorlinearmotor sehr viele Antriebsspulen verbaut sind (eine Anzahl in der Größenordnung im Bereich von Hundert oder Tausend ist keine Seltenheit), würde eine derartige Hardwareänderung aber die Gesamtkosten des Langstatorlinearmotors deutlich erhöhen.

Es ist daher eine Aufgabe der gegenständlichen Erfindung eine Transporteinrichtung in Form eines Langstatorlinearmotors anzugeben, in der die verfügbare elektrische Leistung des Leistungsteils des Langstatorlinearmotors zur Erzeugung eines Statorstromes einer Antriebsspule in einer Übergabeposition zur Lenkung einer Transporteinheit besser ausgenutzt werden kann.

Diese Aufgabe wird erfindungsgemäß dadurch gelöst, dass im Übergabebereich zur Erzeugung der Lenkwirkung an einer ersten Seite der Transporteinheit in die mit der Transporteinheit auf dieser ersten Seite zusammenwirkenden Antriebsspulen ein Statorstrom eingeprägt wird, der entweder nur eine elektromagnetische Seitenkraft erzeugt oder nur eine Bremskraft entgegen der Bewegungsrichtung der Transporteinheit, oder nur eine Kombination daraus, bewirkt. Auf diese Weise muss zur Erzeugung der Lenkwirkung auf die Transporteinheit auf dieser ersten Seite keine elektrische Energie zum Erzeugen einer elektromagnetischen Vortriebskraft zur Verfügung gestellt werden. Die gesamte verfügbare Leistung des Leistungsteils des Langstatorlinearmotors zum Bestromen der Antriebsspulen auf dieser ersten Seite kann damit in die Erzeugung der Lenkwirkung fließen. Auf diese Weise kann auch die Lenkwirkung selbst verstärkt werden, weil die ganze elektrische Energie in die Erzeugung der Lenkwirkung fließen kann und es kann eine sicherere Lenkung der Transporteinheit erreicht werden.

Dabei spielt es keine Rolle, ob an der gegenüberliegenden zweiten Seite eine elektromagnetische Seitenkraft erzeugt wird, oder eine elektromagnetische Vortriebskraft in Bewegungsrichtung (oder beides), oder ob an dieser zweiten Seite überhaupt keine Kraft erzeugt wird, indem die Antriebsspulen dieser zweiten Seite nicht bestromt werden.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Transporteinrichtung in Form eines Langstatorlinearmotors,
Fig.2 den konstruktiven und elektrischen Aufbau des Langstatorlinearmotors,
Fig.3 ein Regelungskonzept des Langstatorlinearmotors,
Fig.4 erste Ausführung eines erfindungsgemäßen Verfahrens zur Übergabe einer Transporteinheit an einer Übergabeposition und
Fig.5 eine zweite Ausführung eines erfindungsgemäßen Verfahrens zur Übergabe einer Transporteinheit an einer Übergabeposition.

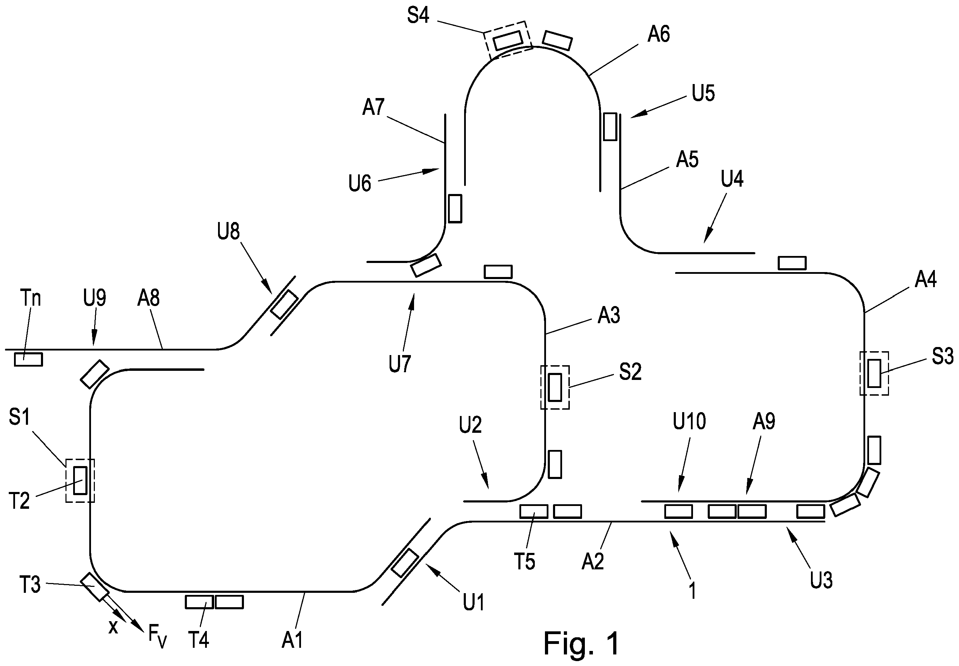

In Fig.1 ist eine Transporteinrichtung 1 in Form eines Langstatorlinearmotors beispielhaft dargestellt. Die Transporteinrichtung 1 besteht aus einer Anzahl von Transportabschnitten A1 ... A9, die zur Transporteinrichtung 1 zusammengestellt sind. Dieser modulare Aufbau ermöglicht eine sehr flexible Gestaltung der Transporteinrichtung 1, bedingt aber auch eine Vielzahl von Übergabepositionen U1 ... U9, an denen die auf der Transporteinrichtung 1 bewegten Transporteinheiten T1 ... Tn (aus Gründen der Übersichtlichkeit sind in Fig.1 nicht alle Transporteinheiten mit einem Bezugszeichen gekennzeichnet) von einem Transportabschnitt A1 ... A9 auf einen anderen übergeben werden, n ist hierbei ein Index, der für die vorhandene Anzahl von Transporteinheiten steht.

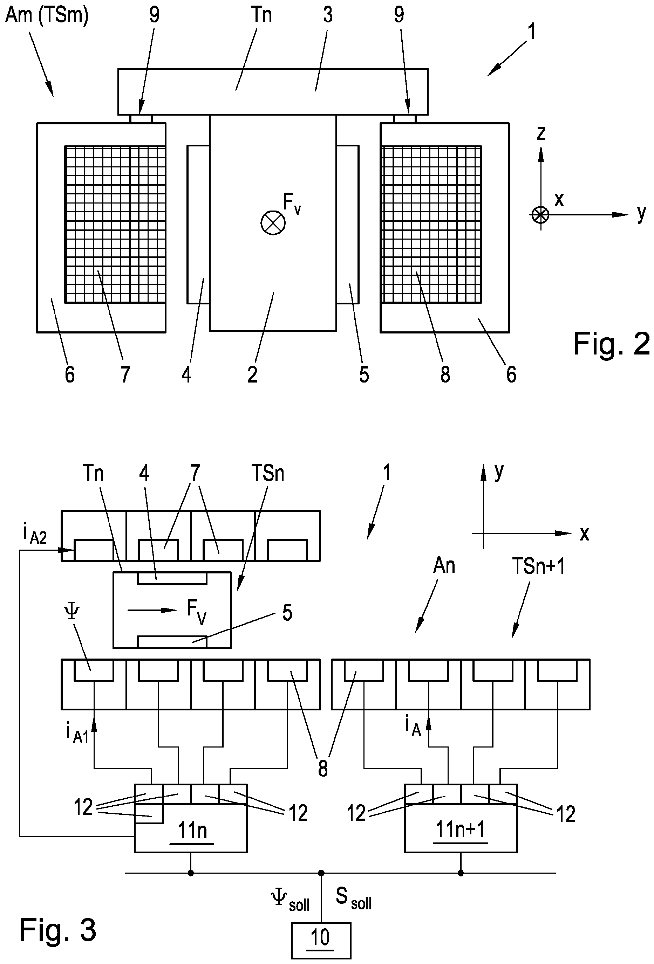

Die Transporteinrichtung 1 ist als Langstatorlinearmotor ausgeführt, bei denen die Transportabschnitte A1 ... A9 in an sich bekannter Weise jeweils einen Teil eines Langstators eines Langstatorlinearmotors ausbilden. Es ist ebenso bekannt, dass ein Transportabschnitt A1 ... A9 aus einzelnen Transportsegmenten TS zusammengesetzt werden kann, wobei jedes Transportsegment TS jeweils eine Anzahl von Antriebsspulen trägt. Entlang der Transportabschnitte A1 ... A9 sind daher in Längsrichtung x in bekannter Weise eine Vielzahl von elektrischen Antriebsspulen angeordnet (in Fig.1 aus Gründen der Übersichtlichkeit nicht dargestellt), die mit Erregungsmagneten an den Transporteinheiten T1 ... Tn (siehe Fig.3) zusammenwirken. In ebenso bekannter Weise wird durch Kontrolle des elektrischen Statorstromes i_{A} der Antriebsspulen 7, 8 für jede der Transporteinheiten T1 ... Tn eine Vortriebskraft Fᵥ erzeugt, die die Transporteinheiten T1 ... Tn in Längsrichtung x entlang der Transportabschnitte A1 ... A9, also entlang der Transportstrecke, bewegt. Jede der Transporteinheiten T1 ... Tn kann dabei individuell (Geschwindigkeit, Beschleunigung, Bahn) und unabhängig (bis auf die Vermeidung von möglichen Kollisionen) von den anderen Transporteinheiten T1 ... Tn bewegt werden. Nachdem dieses grundlegende Prinzip eines Langstatorlinearmotors hinreichend bekannt ist, wird hier nicht näher darauf eingegangen.

Entlang der Transportstrecke der Transporteinrichtung 1 sind auch einige Übergabepositionen U1 ... U10 angeordnet. Hierbei sind verschiedene Arten von Übergabepositionen U1 ... U10 denkbar. An den Übergabepositionen U2 und U7 ist z.B. eine Weiche vorgesehen, während die anderen Übergabepositionen U1, U3 ... U6, U8, U9 z.B. als Wechselstellen von einem Transportabschnitt A1 ... A8 auf einen anderen ausgeführt sind. An der Übergabeposition U10 ist z.B. ein Übergang von einem einseitigen Transportabschnitt A2 auf einen zweiseitigen Transportabschnitt A9 vorgesehen. An der Übergabeposition U2 (Weiche) kann eine Transporteinheit T6 beispielswiese auf dem Transportabschnitt A2 oder dem Transportabschnitt A3 weiterbewegt werden. An einer Übergabeposition U1 (Wechselposition) wird eine Transporteinheit T5 vom einseitigen Transportabschnitt A1 an den einseitigen Transportabschnitt A2 übergeben. Jede Übergabeposition U kann von einer Transporteinheit Tn natürlich in beide Richtungen durchfahren werden.

Entlang der Transportstrecke der Transporteinrichtung 1, die im Wesentlichen durch die Längsrichtung x der Transportabschnitt A1 ... A8 gegeben ist, können auch eine Anzahl von Arbeitsstationen S1 ... S4 angeordnet sein, in denen eine Manipulation an den mit den Transporteinheit T1 ... Tn transportierten Komponenten stattfindet. Die Arbeitsstation S1 kann beispielsweise als Einschleuse- und/oder Ausschleusestation ausgeführt sein, in der fertig bearbeitete Komponenten entnommen werden und zu bearbeitende Komponenten an eine Transporteinheit T1 ... Tn übergeben werden. In den Arbeitsstationen S2 ... S4 können an den Komponenten irgendwelche Bearbeitungsschritte vorgenommen werden. Dabei können die Transporteinheiten T1 ... Tn in einer Arbeitsstationen S1 ...S4 zur Bearbeitung gestoppt werden, z.B. in einer Füllstation, in der leere Flaschen befüllt werden, oder durchbewegt werden, z.B. in einer Temperierstation in der Komponenten temperaturbehandelt werden, gegebenenfalls auch mit einer anderen Geschwindigkeit als zwischen den Arbeitsstationen S1 ... S4.

Die Transporteinrichtung 1 umfasst zumindest zwei Transportabschnitte Am, An und zumindest eine Übergabeposition U, die diese beiden Transportabschnitte Am, An miteinander verbindet. Um eine erfindungsgemäße Übergabeposition U realisieren zu können, ist es zumindest im Bereich der Übergabeposition U erforderlich, dass in Bewegungsrichtung x gesehen an beiden Seiten der Transporteinheit Tn Antriebsspulen 7, 8 vorgesehen sind und dass an beiden Seiten der Transporteinheit Tn Erregungsmagnete 4, 5 angeordnet sind. Die Erregungsmagnete 4, 5 können als Permanentmagnete oder als Elektromagnete ausgeführt sein.

Eine besonders vorteilhafte Ausgestaltung des Langstatorlinearmotors, zumindest im Bereich der Übergabepositionen U, wird anhand von Fig.2 erläutert. Fig.2 zeigt einen Querschnitt durch einen beliebigen Transportabschnitt Am und einer darauf bewegten Transporteinheit Tn. Eine Transporteinheit Tn besteht beispielsweise aus einem Grundkörper 2 und einer daran angeordneten Komponentenaufnahme 3, wobei die Komponentenaufnahme 3 grundsätzlich an einer beliebigen Stelle des Grundkörpers 2 angeordnet sein kann, insbesondere auch an der Unterseite für hängende Komponenten, oder auch als Teil des Grundkörpers 2 ausgeführt sein kann. Am Grundkörper 2 ist zu beiden Seiten der Transporteinheit Tn (in Bewegungsrichtung gesehen) die Anzahl der Erregungsmagnete 4, 5 des Langstatorlinearmotors angeordnet. Die Transportstrecke der Transporteinrichtung 1, bzw. eines Transportabschnitts Am, bzw. eines Transportsegments TSm eines Transportabschnitts Am, wird durch eine stationäre Führungskonstruktion 6 gebildet, an der die Antriebsspulen 7, 8 des Langstatorlinearmotors angeordnet sind. Der Grundkörper 2 mit den beidseitig angeordneten Erregungsmagneten 4, 5 ist dabei zwischen den Antriebsspulen 7, 8 angeordnet. Damit ist jeweils zumindest ein Erregungsmagnet 4, 5 zumindest einer Antriebsspule 7, 8 (oder einer Gruppe von Antriebsspulen) gegenüberliegend angeordnet und wirkt damit mit der Antriebsspule 7, 8 zur Erzeugung einer Vortriebskraft Fᵥ zusammen. Damit ist die Transporteinheit Tn zwischen der Führungskonstruktion 6 und entlang der Transportstrecke bewegbar. Am Grundkörper 2 und/oder an der Komponentenaufnahme 3 können natürlich auch noch (hier aus Gründen der Übersichtlichkeit nicht dargestellte oder nur angedeutete) Führungselemente 9, wie Rollen, Räder, Gleitflächen, etc., vorgesehen sein, um die Transporteinheit Tn entlang der Transportstrecke zu führen. Die Führungselemente der Transporteinheit Tn wirken dabei zur Führung mit der stationären Führungskonstruktion 6, oder Teilen davon, zusammen, z.B. in dem sich die Führungselemente 9 an der Führungskonstruktion 6 abstützen, daran abgleiten oder abrollen, etc. Die Führung der Transporteinheit Tn kann aber auch zumindest durch das Vorsehen von Führungsmagneten erfolgen.

Um eine Transporteinheit Tn in Bewegungsrichtung x vorwärts zu bewegen wird in die beidseitigen Antriebsspulen 7, 8 im Bereich der Transporteinheit Tn bekanntermaßen ein Statorstrom i_{A1}, i_{A2} eingeprägt, um ein elektromagnetisches Feld zu erzeugen, das mit den Erregungsmagneten 4, 5 an der Transporteinheit Tn wechselwirkt. Dabei können in verschiedene Antriebsspule 7, 8 auch unterschiedliche Statorströme i_{A1}, i_{A2} eingeprägt werden. Hierbei ist es auch ausreichend nur in die Antriebsspulen 7, 8 einen Statorstrom i_{A1}, i_{A2} einzuprägen, die gerade mit den Erregungsmagneten 4, 5 an der Transporteinheit Tn zusammenwirken können. Für die Bewegung der Transporteinheit Tn müssen aber nicht gleichzeitig die beidseitig angeordneten Antriebsspulen 7, 8 durch Einprägen eines Statorstromes i_{A} bestromt werden. Es reicht grundsätzlich aus, wenn die auf die Transporteinheit Tn zur Bewegung wirkende Vortriebskraft Fᵥ nur mittels der Antriebsspulen 7, 8 einer Seite und Erregungsmagnet 4, 5 auf der zugehörigen Seite der Transporteinheit Tn erzeugt wird. An Streckenabschnitten der Transportstrecke, an denen eine große Vortriebskraft Fᵥ benötigt wird, z.B. im Falle einer Steigung, einer schweren Last oder in Bereichen der Beschleunigung der Transporteinheit Tn, können die Antriebsspulen 7, 8 beispielsweise zu beiden Seiten bestromt werden (sofern vorhanden, z.B. Transportabschnitt A9 in Fig.1), womit die Vortriebskraft Fᵥ vergrößert werden kann. Ebenso ist es denkbar, dass in gewissen Transportabschnitten A die Führungskonstruktion 6 nur einseitig ausgeführt ist, oder dass in gewissen Transportabschnitten A die Führungskonstruktion 6 zwar zweiseitig ausgeführt ist, aber nur einseitig mit Antriebsspulen 7, 8 bestückt ist. Das ist auch in Fig.1 angedeutet, in der Streckenabschnitte mit beidseitiger Führungskonstruktion 6 und Streckenabschnitte mit nur einseitiger Führungskonstruktion 6 angedeutet sind.

In Analogie zu einem rotierenden Elektromotor, können die einzelnen Statorströme der aktiven Antriebsspulen 7, 8 bekannterweise in ein dq-Koordinatensystem transformiert werden. In diesem dq-Koordinatensystem ergibt sich ein Stromraumvektor mit einer vortriebskraftbildenden Stromkomponente (q-Komponente) und einer seitenkraftbildenden Stromkomponenten (d-Komponente). Für die Bewegung einer Transporteinheit Tn wird der hierfür benötigte Stromraumvektor des Statorstromes i_{A} im dq-Koordinatensystem, mit vortriebskraftbildender Stromkomponente (q-Komponente) und/oder seitenkraftbildender Stromkomponenten (d-Komponente), berechnet (beispielsweise in einem Stromregler) und anschließend in die einzelnen Statorströme i_{A1}, i_{A2}, die an den wirkenden Antriebsspulen 7, 8 anzulegen sind, umgerechnet. Diese Transformation kann mit der bekannten, an den Linearmotor angepassten Park-Transformation durchgeführt werden. Zur Bewegung der Transporteinheit Tn muss das durch die einzelnen Statorströme i_{A1}, i_{A2} erzeugte elektromagnetische Feld entlang der Transportstrecke weiterwandern, weshalb in Bewegungsrichtung x auch immer andere Antriebsspulen 7, 8 für die Bewegung der Transporteinheit Tn bestromt werden müssen.

Für die Bewegung einer Transporteinheit Tn werden somit die Statorströme i_{A1}, i_{A2} der gerade wirkenden Antriebsspulen 7, 8 geregelt. Hierfür ist jeder Antriebsspule 7, 8 ein Spulenregler zugeordnet, der den Statorstrom i_{A1}, i_{A2} der zugeordneten Antriebsspulen 7, 8 einregelt. Die Antriebsspulen 7, 8 können damit unabhängig voneinander mit einem Statorstrom i_{A1}, i_{A2} bestromt werden, beispielsweise indem entsprechende elektrische Spannungen an die Antriebsspule 7, 8 angelegt werden. Man spricht in diesem Zusammenhang auch von Einzelspulenansteuerung. Ein mögliches Regelungskonzept zum einzelnen Regeln der Antriebsspulen 7, 8 ist in Fig.3 dargestellt. In diesem Beispiel ist ein Transportabschnitt An aus mehreren Transportsegmenten TSn, TSn+1 mit jeweils einer Anzahl von Antriebsspulen 7, 8 zusammengesetzt. Das Transportsegment TSn ist ein zweiseitiges Segment mit Antriebsspulen 7, 8 an beiden Seiten und das Transportsegment TSn+1 ein einseitiges Segment mit Antriebsspulen 8 an nur einer Seite. Jeder Antriebsspule 7, 8 ist ein Spulenregler 12 zugeordnet, der den in die zugeordnete Antriebspule 7, 8 einzuprägenden Statorstrom i_{A1}, i_{A2} berechnet. Ein Leistungsteil, das den benötigten Statorstrom i_{A1}, i_{A2} erzeugt und in die Antriebsspulen 7, 8 einprägt ist aus Gründen der Übersichtlichkeit nicht dargestellt. Die Spulenregler 12 mehrerer Antriebsspulen 7, 8 können auch in Segmentregelungseinheiten 11 zusammengefasst werden, wobei vorteilhafterweise alle Spulenregler 12 der Antriebsspulen 7, 8 eines Transportsegments TSn, TSn+1 in einer zugeordneten Segmentregelungseinheit 11 zusammengefasst werden. Damit kann die Segmentregelungseinheit 11 beispielsweise eine Computerhardware sein, auf der die Spulenregler 12 jeweils als Software implementiert sind. Selbstverständlich kann aber ein Spulenregler 12 auch als separate Hardware und Software ausgeführt sein. Die einzelnen Spulenregler 12 können natürlich auch beliebig anders in einer Segmentregelungseinheit 11 zusammengefasst sein. Beispielsweise können den Antriebsspulen 7, 8 an den beiden Seiten jeweils Segmentregelungseinheiten 11 mit Spulenreglern 12, oder allgemein Spulenregler 12, zugeordnet sein.

Eine Transporteinheit Tn, die sich in einem Streckenabschnitt, beispielsweise ein Transportsegment TSn, befindet, wird daher von den zugehörigen Spulenreglern 12 geregelt. Im Wesentlichen bedeutet das, dass die Spulenregler 12 die Antriebsspulen 7, 8 des zugehörigen Streckenabschnittes, z.B. des Transportsegments TSn, so regelt, dass die Transporteinheit Tn durch die erzeugte Vortriebskraft F_{V} in der gewünschten Weise (Geschwindigkeit, Beschleunigung) entlang des Transportsegments TS bewegt wird. Die Bewegung der Transporteinheit Tn durch die Transporteinrichtung 1 kann in einer übergeordneten Anlagenregelungseinheit 10, die mit den Spulenreglern 12 verbunden ist, überwacht und vorgegeben werden. Die Anlagenregelungseinheit 10 steuert beispielsweise durch Positionsvorgaben oder Geschwindigkeitsvorgaben (als Sollgrößen der Regelung) die Bewegung der Transporteinheiten Tn durch die Transporteinrichtung 1. Die Spulenregler 12 regeln dann einen allfälligen Fehler zwischen Sollgröße (z.B. Sollposition) und Istgröße (z.B. Istposition) aus. Nachdem eine derartige Regelung der Bewegung einer Transporteinheit Tn eines Langstatorlinearmotors mit Einzelspulenansteuerung hinlänglich bekannt ist, beispielsweise aus der EP 3 251 986 A1, wird nachfolgend nur soweit darauf eingegangen, soweit es für das Verständnis der gegenständlichen Erfindung erforderlich ist.

Wichtig ist, dass durch die Regelung der Statorströme i_{A1}, i_{A2} der Antriebsspulen 7, 8 durch eine vortriebskraftbildende Stromkomponenten i_{Aq1}, i_{Aq2} des Statorstromes i_{A} (im dq-Koordinatensystem), bzw. den daraus hervorgehenden magnetischen Fluss ψ (magnetischer Fluss ψ und Statorstrom i_{A} sind als äquivalent anzusehen), eine Vortriebskraft F_{V} erzeugt werden kann. Die Vortriebskraft F_{V} kann durch die Antriebsspulen 7, 8 nur einer Seite erzeugt werden, oder durch die Antriebsspulen 7, 8 an beiden Seiten. Neben der für die Bewegung der Transporteinheit Tn benötigten Vortriebskraft F_{V} kann mit einer Antriebsspule 7, 8 durch eine seitenkraftbildende Stromkomponente i_{Ad1}, i_{Ad2} des Statorstromes i_{A} (im dq-Koordinatensystem) auch eine auf die Transporteinheit Tn wirkende elektromagnetische Seitenkraft F_{EMS} in Seitenrichtung y quer zur Bewegungsrichtung x erzeugt werden. Dazu wird beispielsweise einer der mit der Transporteinheit Tn zusammenwirkenden Antriebsspulen 7, 8 ein Statorstrom i_{A1}, i_{A2} eingeprägt, der neben der vortriebskraftbildenden elektromagnetischen Kraftkomponente, die die Vortriebskraft Fᵥ bewirkt, eine Kraftkomponente quer dazu, also in Seitenrichtung y, hervorruft. Das wird erfindungsgemäß in einer Übergabeposition U ausgenutzt, um eine auf die Transporteinheit Tn wirkende Lenkwirkung L zu erzeugen, um die Transporteinheit Tn gezielt auf einen gewünschten Transportabschnitt An zu lenken.

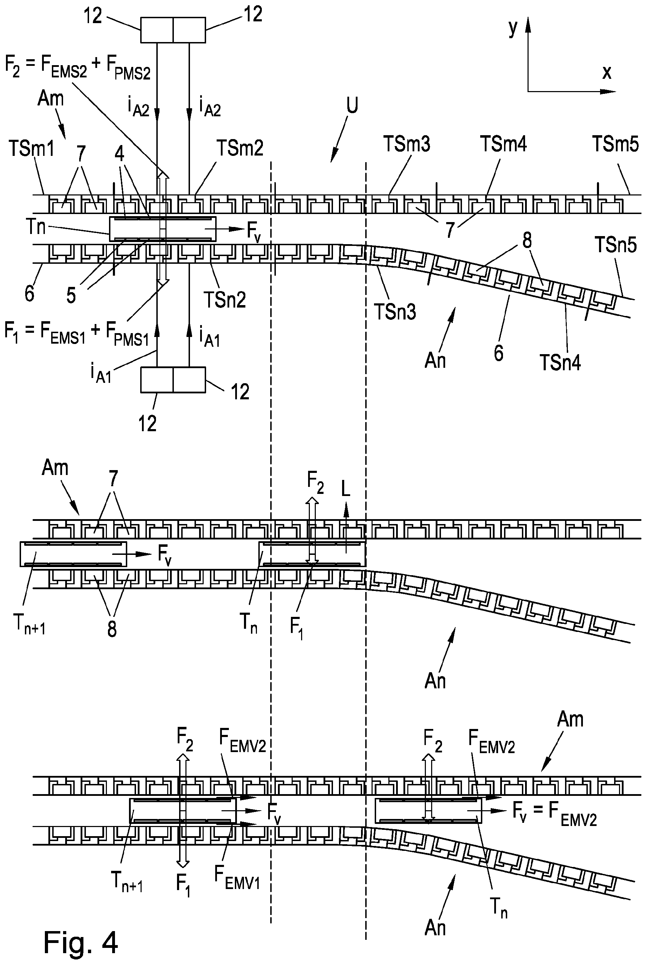

Eine erstes Ausführungsbeispiel der Erfindung wird anhand der Fig.4 am Beispiel einer Übergabeposition U in Form einer divergierenden Weiche, wie z.B. die Übergabeposition U2 in Fig.1, zwischen zwei Transportabschnitten Am, An. Entlang der Transportabschnitte Am, An sind wie oben beschrieben, zumindest in der Übergabeposition U, die Antriebsspulen 7, 8 in Bewegungsrichtung hintereinander angeordnet. Die Transportabschnitte Am, An bestehen hier aus in Längsrichtung hintereinander folgenden Transportsegmenten TSm1, TSm2, TSm3, TSm4, TSm5 auf einer ersten Seite und TSn1, TSn2, TSn3, TSn4 auf der gegenüberliegenden zweiten Seite, jeweils mit einer Anzahl von Antriebsspulen 7, 8. Die Transportabschnitte Am, An sind zu Beginn der Übergabeposition U, zumindest bis zum Beginn des divergierenden Abschnitts, nebeneinander angeordnet, sodass die Antriebsspulen 7, 8 der beiden Seiten jeweils mit Erregungsmagneten 4, 5 an beiden Seiten der Transporteinheit Tn zusammenwirken können. Jeder Antriebsspule 7, 8 ist ein Spulenregler 12 zugeordnet, der den anzulegenden Statorstrom i_{A1}, i_{A2} berechnet, wobei die Statorströme i_{A1}, i_{A2} verschiedener Antriebsspulen 7, 8 nicht gleich sein müssen und in der Regel nicht gleich sind. Vor allem im Falle einer Weiche als Übergabeposition U ist im divergierenden Bereich der Ausfahrt (oder Einfahrt bei umgekehrter Fahrtrichtung) ein Streckenabschnitt vorhanden, an dem nur an einer Seite eine Führungskonstruktion 6 bzw. Antriebsspulen 7, 8 angeordnet werden können.

Auf die Transporteinheit Tn wirken an den beiden Seiten immer die erregungsmagnetischen Seitenkräfte F_{PMS1}, F_{PMS2} aufgrund des Zusammenwirkens der Erregungsmagnete 4, 5 der Transporteinheit Tn mit ferromagnetischen Bestandteilen der Führungskonstruktion 6. Die an beiden Seiten der Transporteinheit Tn wirkenden erregungsmagnetischen Seitenkräfte F_{PMS1}, F_{PMS2} sind üblicherweise (aber nicht notwendigerweise), bei gleichem Luftspalt, gleichem Aufbau der Führungskonstruktion 6 an beiden Seiten, usw., gleich groß und entgegengerichtet, sodass die vektorielle Summe der wirkenden erregungsmagnetischen Seitenkräfte F_{PMS1}, F_{PMS2} vorzugsweise Null ergibt.

Die gegenständliche Erfindung beruht nun darauf, dass der magnetische Fluss ψ bzw. das magnetische Feld zwischen Transporteinheit Tn und Antriebsspulen 7, 8 bzw. der Führungskonstruktion 6, das von den Erregungsmagneten 4, 5 hervorgerufen wird, an zumindest einer Seite (in Querrichtung y) über den Statorstrom i_{A1}, i_{A2} zumindest einer Antriebsspule 7, 8 gezielt beeinflusst wird, um der Transporteinheit Tn eine Lenkwirkung L einzuprägen.

In einer ersten Ausgestaltung der Erfindung wird in einem Übergabebereich der Übergabeposition U, also in dem Bereich, in dem die Transporteinheit Tn gezielt gelenkt werden muss, an einer Seite der Transporteinheit Tn in die mit der Transporteinheit Tn zusammenwirkenden Antriebsspulen 7, 8 dieser Seite ein Statorstrom i_{A1}, i_{A2} eingeprägt, der nur eine elektromagnetische Seitenkraft F_{EMS} erzeugt. Es wird an dieser Seite somit nur eine seitenkraftbildende Stromkomponenten i_{A1d}, i_{A2d} (im dq-Koordinatensystem) erzeugt und es wird auf dieser Seite durch den Statorstrom i_{A1}, i_{A2} keine Vortriebskraft F_{V} erzeugt. Eine Vortriebskraft F_{V2} kann hingegen an der gegenüberliegenden Seite der Transporteinheit Tn erzeugt werden. Es kann aber vorgesehen sein, dass auch an der zweiten Seite keine Vortriebskraft F_{V2} erzeugt wird. In diesem Fall würde die Transporteinheit Tn ohne aktiven Antrieb in Bewegungsrichtung x durch die Übergabeposition U fahren. Nachdem eine Übergabeposition U von einer Transporteinheit Tn typischerweise in wenigen Millisekunden durchfahren wird, macht sich das kurzzeitige Wegschalten einer Vortriebskraft F_{V} auf nur einer Seite, oder auf beiden Seiten, in der Bewegung der Transporteinheit Tn kaum bemerkbar und kann akzeptiert werden. In beiden Fällen kann aber der gesamte verfügbare elektrische Strom auf einer Seite für die Erzeugung der Lenkwirkung L genutzt werden, weil auf dieser Seite kein Strom für die Erzeugung der Vortriebskraft F_{V} benötigt wird. Es kann auch an der zweiten Seite über den Statorstrom i_{A1}, i_{A2} eine elektromagnetische Seitenkraft F_{EMS} erzeugt werden, was aber nicht notwendigerweise der Fall sei muss.

Die Flusskomponenten ψ_{d} des über die Statorströme i_{A1}, i_{A2} eingeprägten elektromagnetischen Feldes, die eine Seitenkraft hervorrufen, dienen hierbei der Schwächung oder Stärkung des wirkenden erregungsmagnetischen Feldes. Damit wirken auf die Transporteinheit Tn an den beiden Seiten die resultierenden Seitenkräfte F1, F2, die sich jeweils als Summe aus der wirkenden erregungsmagnetischen Seitenkraft F_{PMS} und, falls vorhanden, der elektromagnetischen Seitenkraft F_{EMS} an jeder Seite der Transporteinheit Tn ergeben, also F₁ = F_{PMS1} + F_{EMS1} und F₂ = F_{PMS2} + F_{EMS2}. Die Lenkwirkung L ergibt sich dann aus der vektoriellen Summe der resultierenden Seitenkräfte F₁, F₂. Über die Statorströme i_{A1}, i_{A2}, bzw. über die seitenkraftbildenden Stromkomponenten i_{A1d}, i_{A2d}, kann die erzeugte Seitenkraft F_{EMS1}, F_{EMS2} gezielt in Richtung und Betrag eingestellt werden, womit die Lenkwirkung L gezielt eingestellt werden kann.

Überall dort, wo keine elektromagnetische Seitenkraft F_{EMS} benötigt wird, also z.B. außerhalb einer Übergabeposition U, werden die in die Antriebsspulen 7, 8 eingeprägten Statorströme i_{A1}, i_{A2} vorzugsweise so geregelt, dass die vektorielle Summe der resultierenden Seitenkräfte F₁, F₂ Null ist. Im Idealfall bedeutet das, dass die elektromagnetischen Seitenkräfte F_{EMS1}, F_{EMS2} gleich Null sind. Damit erreicht man in diesen Bereichen einen maximalen Wirkungsgrad der Bewegung der Transporteinheit Tn, da die ganze verfügbare elektrische Energie in die Erzeugung der Vortriebskraft F_{V} fließen kann.

Es sei an dieser Stelle nur am Rande erwähnt, dass es auch einfach magnetisierbare und entmagnetisierbare Permanentmagnete gibt, beispielsweise AINiCo-Magnete, die beispielsweise durch das elektromagnetische Feld, das von den Antriebsspulen 7, 8 erzeugt wird, gezielt magnetisiert werden können. Beispielsweise kann auf diese Weise die Polung solcher Permanentmagnete als Erregungsmagnete 4, 5 auf einer Transporteinheit Tn verändert oder die magnetische Spannung der Permanentmagnete erhöht oder verringert werden. Auch auf diese Weise könnte man die erregungsmagnetischen Seitenkraft F_{PMS1}, F_{PMS2} gezielt beeinflussen, um eine Lenkwirkung zu erzeugen.

Die Durchfahrt einer Transporteinheit Tn durch eine Übergabeposition U kann daher wie folgt ablaufen, wie anhand der Fig.4 erläutert wird. Im Einfahrtsbereich der Übergabeposition U (Fig.4 oben) werden die Statorströme i_{A1}, i_{A2} vorzugsweise beidseitig so eingeprägt, dass die vektorielle Summe der resultierenden Seitenkräfte F₁, F₂ Null sind. Dazu kann vorgesehen sein, dass keine elektromagnetischen Seitenkräfte F_{EMS1}, F_{EMS2} erzeugt werden. Die entstehenden resultierenden Seitenkräfte F₁, F₂, die sich vorzugsweise auf die erregungsmagnetischen Seitenkräfte F_{PMS1}, F_{PMS2} reduzieren, sind damit im Einfahrtsbereich der Übergabeposition U im Normalfall gleich groß und entgegengerichtet und heben sich damit auf. Die Statorströme i_{A1}, i_{A2} erzeugen aber eine Vortriebskraft F_{V}, die von den Antriebsspulen 7, 8 beider Seiten oder von nur einer Seite erzeugt wird.

Im Übergabebereich (Fig.4 Mitte) der Übergabeposition U werden die Statorströme i_{A1}, i_{A2}, die in die Antriebsspulen 7, 8 eingeprägt werden, nun so geändert, dass sich durch Feldschwächung oder Feldstärkung des erregungsmagnetischen Feldes resultierende Seitenkräfte F₁, F₂ an den beiden Seiten der Transporteinheit Tn ergeben, die im Betrag unterschiedlich sind. Im gezeigten Ausführungsbeispiel werden die Antriebsspulen 8 an einer ersten Seite mit einem Statorstrom i_{A1} bestromt, die nur eine Seitenkraft F_{EMS1}, aber keine elektromagnetische Vortriebskraft F_{EMV1}, erzeugen. Dazu werden beispielsweise an dieser Seite die Antriebsspulen 8 mit Statorströmen i_{A1} bestromt, die das erregungsmagnetische Feld schwächen. Anders ausgedrückt wird mit den Statorströmen i_{A1} der ersten Seite eine elektromagnetische Seitenkraft F_{EMS1} erzeugt, die entgegen der an dieser Seite wirkenden erregungsmagnetischen Seitenkraft F_{PMS1} gerichtet ist. An der gegenüberliegenden zweiten Seite werden in die wirkenden Antriebsspulen 7 überhaupt keine Statorströme i_{A2} eingeprägt, womit die Transporteinheit Tn in diesem Fall durch den Übergabebereich der Übergabeposition U ohne Vortriebskraft F_{V} durchbewegt wird. An der ersten Seite ergibt sich dadurch eine resultierende erste Seitenkraft F₁ = F_{PMS1} - F_{EMS1} und an der zweiten Seite eine resultierende zweite Seitenkraft F₂ = F_{PMS2} > F₁. Die Lenkwirkung L, hier eine Lenkkraft in die gewünschte Richtung, ergibt sich aus der Differenz zwischen F₁ und F₂. Die resultierende Lenkwirkung L führt die Transporteinheit Tn im gezeigten Ausführungsbeispiel entlang des Transportabschnitts Am, womit die Transporteinheit Tn im Ausfahrtsbereich der Übergabeposition U geradeaus weiterbewegt wird (Fig.4 unten). Soll die Transporteinheit Tn am Transportabschnitt An weiterbewegt werden, so ist eine Lenkwirkung L zu erzeugen, die die Transporteinheit Tn auf diesen Transportabschnitt An lenkt (also F₁ > F₂).

Es ist aber auch möglich, dass an der zweiten Seite durch die Statorströme i_{A2} der an dieser Seite wirkenden Antriebsspulen 7 eine zweite elektromagnetische Seitenkraft F_{EMS2} erzeugt wird. Vorzugsweise werden dabei elektromagnetische Seitenkräfte F_{EMS1}, F_{EMS2} an den beiden Seiten der Transporteinheit Tn erzeugt, die in dieselbe Richtung zeigen, sodass auf einer Seite die erregungsmagnetische Seitenkraft F_{PMS} verstärkt wird und auf der anderen geschwächt wird. Man könnte den magnetischen Fluss ψ aber auch so ändern, dass die erzeugten elektromagnetische Seitenkräfte F_{EMS1}, F_{EMS2} an den beiden Seiten der Transporteinheit Tn unterschiedliche Richtungen haben, wobei sich diese aber zum Teil aufheben würden, was letztendlich nur mit höheren Verlusten verbunden wäre. Die Feldschwächung erfolgt dabei vorzugsweise auf der Seite der Transporteinheit Tn, entlang der die Transporteinheit Tn nicht weiterbewegt werden soll, hier an den Antriebsspulen 8. Die Feldstärkung erfolgt vorzugsweise an der Seite, an der die Transporteinheit Tn weiterbewegt werden soll, hier an den Antriebsspulen 7. Letztendlich ist es aber nur wichtig, dass sich als Lenkwirkung in die gewünschte Richtung eine Differenz der resultierenden Seitenkräfte F₁, F₂ auf den beiden Seiten ergibt. Gleichfalls ist es möglich an der zweiten Seite durch die Statorströme i_{A2} der an dieser Seite wirkenden Antriebsspulen 7 eine elektromagnetische Vortriebskraft F_{EMV2} zu erzeugen, das kann auch zusätzlich zu einer elektromagnetischen Seitenkraft F_{EMS2} erfolgen. Damit ergibt sich im Übergabebereich entweder eine resultierende Vortriebskraft F_{V} auf die Transporteinheit Tn von Null oder entsprechend der wirkenden elektromagnetische Vortriebskraft F_{EMV2} (F_{V} = F_{EMV2}).

Dadurch, dass an der ersten Seite nur eine elektromagnetische Seitenkraft F_{EMS1} erzeugt wird, ist ausreichend elektrische Energie verfügbar, um die wirkende erregungsmagnetische Seitenkraft F_{PMS1}, gegebenenfalls ausreichend zu verstärken oder zu schwächen, um die Lenkwirkung L in die gewünschte Richtung, hier in Richtung der ersten Seite, zu erzeugen. Würde auf diese Seite zusätzlich eine elektromagnetische Vortriebskraft F_{EMV1} erzeugt werden, wäre das unter Umständen nicht möglich.

Im Ausfahrtsbereich (Fig.4 unten) kann mit den Antriebsspulen 7 des Transportabschnitts Am, entlang dem die Transporteinheit Tn weiterbewegt wird, auch wieder eine elektromagnetische Vortriebskraft F_{EMV2} erzeugt werden. Sobald die Transporteinheit Tn sicher auf den gewünschten Streckenabschnitt gelenkt wurde, kann die Erzeugung einer elektromagnetischen Seitenkraft F_{EMS1}, und gegebenenfalls einer elektromagnetischen Seitenkraft F_{EMS2} auf der anderen Seite, wieder eingestellt werden, weil dann in der Regel nur mehr eine Vortriebskraft F_{V} benötigt wird.

Es ist damit offensichtlich, dass durch Regelung der Statorströme i_{A} im Bereich der Übergabeposition eine Lenkwirkung L in eine der beiden Seitenrichtungen erzeugt werden kann, die die Transporteinheit Tn entlang des gewünschten Streckenabschnittes führt. Dabei kann zu jedem Zeitpunkt der Bewegung der Transporteinheit Tn aber nicht nur die Richtung der Lenkwirkung L vorgegeben werden, sondern insbesondere auch auch die Größe dieser Lenkwirkung L. Diese Lenkwirkung L kann dabei über die Zeit, bei Durchfahrt durch die Übergabeposition U, auch veränderlich sein und kann auch auf die jeweilige Transporteinheit Tn und auch auf die aktuelle Bewegung abgestellt sein. Z.B. kann eine mit einer schwereren Last beladene oder eine schneller bewegte Transporteinheit Tn eine höhere Lenkwirkung L benötigen, als eine leere oder langsam bewegte Transporteinheit Tn.

Spätestens bei der Einfahrt der Transporteinheit Tn in den Übergabebereich der Übergabeposition U wird mit der aktiven Regelung der Statorströme i_{A1}, i_{A2} (bzw. der seitenkraftbildenden Stromkomponenten i_{Ad1}, i_{Ad2} in dq-Koordinatensystem) begonnen, vorzugsweise schon davor. Die elektromagnetischen Seitenkräfte F_{EMS1}, F_{EMS2} werden im Übergabebereich durch die Statorströme i_{A1}, i_{A2} zu jedem Zeitpunkt so geregelt, dass sich die benötigte Lenkwirkung L in die gewünschte Richtung und mit dem benötigten Betrag ausbildet. Um eine definierte Lage der Transporteinheit Tn über die gesamte Länge der Übergabeposition U sicherzustellen, ist es aber vorteilhaft, wenn die elektromagnetischen Seitenkräfte F_{EMS1}, F_{EMS2} entlang der gesamten Länge der Übergabeposition U aktiv geregelt werden.

Bei der Ausfahrt der Transporteinheit Tn aus der Übergabeposition U (Fig.4 unten) erhöht sich gleichzeitig der Luftspalt zwischen dem nicht befahrenen Streckenabschnitt (hier Transportabschnitt An) und der Transporteinheit Tn. Dadurch wird die erregungsmagnetische Seitenkraft F_{PMS2} an diesem Streckenabschnitt stark reduziert, was die Führung der Transporteinheit Tn entlang des gewünschten Streckenabschnittes (hier der Transportabschnitts Am) unterstützt. Insbesondere könnte diese Reduktion der erregungsmagnetischen Seitenkraft F_{PMS2} ausreichen, um die Transporteinheit Tn im Ausfahrtsbereich entlang des gewünschten Transportabschnitts Am zu bewegen. Die Antriebsspulen 8 an der Ausfahrt der Übergabeposition U müssten damit auch nicht mehr aktiv geregelt werden, um eine elektromagnetische Seitenkraft F_{EMS1} zu erzeugen.

Die Übergabeposition U muss aber nicht als Weiche ausgeführt sein, sondern kann auch als Übergabe von einer Transportabschnitt Am auf einen anderen Transportabschnitt An ausgeführt sein, wie z.B. die Übergabeposition U1 in Fig.1, wo beispielswiese von einem zweiseitigen Transportabschnitt (Antriebsspulen beidseitig) auf einen einseitigen Transportabschnitt (Antriebsspulen einseitig) übergegangen wird. Dabei würde praktisch nur der divergierende Zweig des Transportabschnittes An wegfallen. Am grundsätzlichen Ablauf der Übergabe, wie oben am Beispiel der Weiche der Fig.4 beschrieben, würde das aber nichts ändern. In diesem Fall kann es aber vorteilhaft sein, die elektromagnetische Seitenkraft F_{EMS} nur an der Seite, an der die Transporteinheit Tn weiterbewegt wird, aktiv zu regeln.

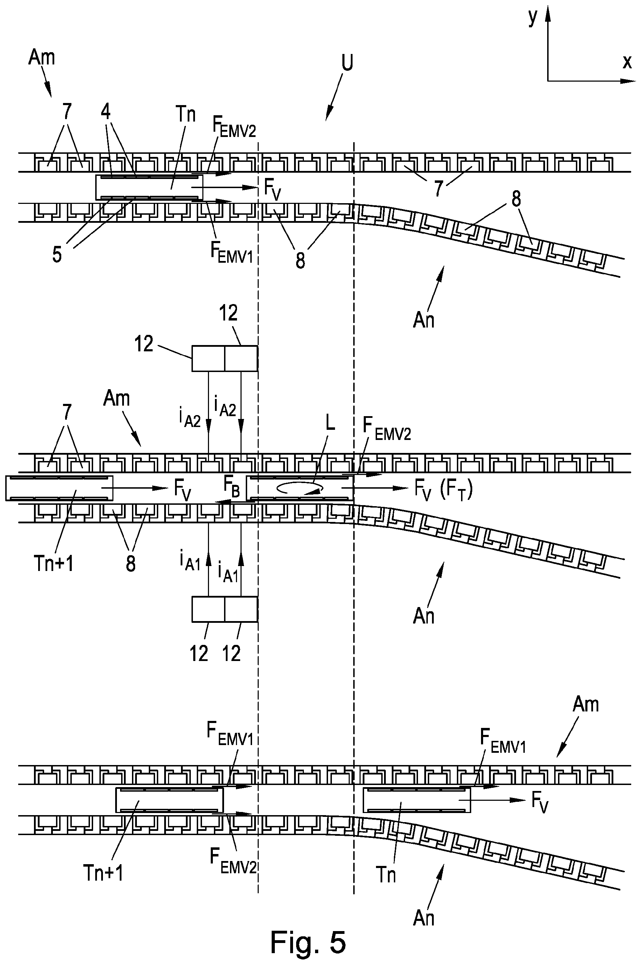

Eine weitere erfindungsgemäße Ausgestaltung wird anhand der Fig.5 wieder am Beispiel einer Weiche als Übergabeposition U erläutert. In der Übergabeposition U treffen wie bereits ausführlich beschrieben, zwei Transportabschnitte Am, An aufeinander. Die Antriebsspulen 7, 8 in Zusammenwirken mit den Erregungsmagneten 4, 5 zu beiden Seite der Transportstrecke erzeugen durch Bestromen mit den Statorströmen i_{A1}, i_{A2} elektromagnetische Vortriebskräfte F_{EMV1}, F_{EMV2}, die sich zur gesamten Vortriebskraft F_{V} der Transporteinheit Tn addieren (Fig.5 oben), also F_{V} = F_{EMV1} + F_{EMV2}. Wie bereits erwähnt, kann aber auch nur auf einer Seite eine elektromagnetische Vortriebskraft F_{EMV1}, F_{EMV2} erzeugt werden. Auch in diesem Ausführungsbeispiel wird im Übergabebereich der Übergabeposition U (Fig.5 Mitte) an zumindest einer ersten Seite die Erzeugung einer elektromagnetischen Vortriebskraft F_{EMV1} in Bewegungsrichtung x eingestellt. Damit wirkt auf die Transporteinheit Tn als Vortriebskraft F_{V} in Bewegungsrichtung x nur mehr die elektromagnetische Vortriebskraft F_{EMV2} der anderen Seite, oder es kann auch auf der anderen Seite keine elektromagnetische Vortriebskraft F_{EMV2} erzeugt werden. Im letzten Fall würde die Transporteinheit Tn den Übergabebereich der Übergabeposition U wieder ohne aktiven Antrieb in Bewegungsrichtung x durchfahren. Auf der ersten Seite werden die mit der Transporteinheit Tn zusammenwirkenden Antriebsspulen 8 dieser Seite mit einem Statorstrom i_{A1} bestromt, der nur eine Bremskraft F_{B} entgegen der Bewegungsrichtung x der Transporteinheit Tn bewirkt, aber keine Kraftkomponente in Bewegungsrichtung x. Durch die elektromagnetische Vortriebskraft F_{EMV2} auf der zweiten Seite und die entgegengerichtete Bremskraft F_{B} auf der ersten Seite entsteht als Lenkwirkung L um die Hochachse z ein Moment auf die Transporteinheit Tn. Falls auf der zweiten Seite im Übergabebereich der Übergabeposition U keine elektromagnetische Vortriebskraft F_{EMV2} erzeugt wird, würde auf die Transporteinheit Tn aufgrund der Bewegung der Transporteinheit Tn in Bewegungsrichtung x zumindest eine Trägheitskraft F_{T} in Richtung der Bewegungsrichtung x wirken, sodass mit der Bremskraft F_{B} und der Trägheitskraft F_{T} ebenfalls ein Moment als Lenkwirkung L hervorgerufen wird. Dieses Moment kann nun ebenfalls als Lenkwirkung L zur Führung der Transporteinheit Tn entlang eines gewünschten Transportabschnittes An, Am genutzt werden.

Im Ausfahrtsbereich der Übergabeposition (Fig.5 unten) kann die Bremskraft F_{B} entgegen der Bewegungsrichtung x wieder weggeschalten werden und die Transporteinheit Tn kann wie gehabt nur an einer Seite angetrieben weiterbewegt werden, oder es kann auch ein beidseitiger Antrieb vorgesehen sein.

Die Methode der Seitenkraft als Lenkwirkung L und die Methode des Moments als Lenkwirkung L kann natürlich auch kombiniert werden. In diesem Fall würde auf einer ersten Seite nur eine elektromagnetische Seitenkraft und eine Bremskraft entgegen der Bewegungsrichtung x der Transporteinheit Tn erzeugt, aber keine Kraftkomponente in Bewegungsrichtung x. Auf der gegenüberliegenden zweiten Seite kann nach Bedarf eine elektromagnetische Seitenkraft F_{EMS2} und/oder eine elektromagnetische Vortriebskraft F_{EMV2} (in Bewegungsrichtung x) erzeugt werden. Auf der zweiten Seite können die mit der Transporteinheit Tn zusammenwirkenden Antriebsspulen 8 aber auch stromlos sein, also kein Statorstrom i_{A2} in diese Antriebsspulen 8 eingeprägt werden.

Das Aufbringen einer ausreichenden Lenkwirkung L ist an sich natürlich nur so lange erforderlich, bis die Führungselemente der Transporteinheit Tn, z.B. Rollen, Räder, Gleitflächen, Magnetlager, oder Ähnliches, am gewünschten Transportabschnitt Am, An sicher wirken.

Damit ist eine definierte Lage der Transporteinheit Tn sichergestellt und spätestens dann kann die aktive Regelung der Antriebsspulen 7, 8 zum Aufbringen der Lenkwirkung L beendet werden.

Die elektromagnetische Vortriebskraft F_{EMV1}, F_{EMV2} wird üblicherweise durch Positionsvorgabe geregelt. Dazu kann einem Positionsregler eine Sollposition vorgegeben werden, der aus der Differenz der Sollposition und einer aktuellen Istposition (mit geeigneten Positionssensoren erfasst werden kann oder aus anderen Messgrößen abgeleitet werden kann) die benötigte vortriebskraftbildende Stromkomponente i_{Aq1}, i_{Aq2} berechnet. Äquivalent dazu könnte auch eine Geschwindigkeitsregelung vorgesehen sein. Diese vortriebskraftbildende Stromkomponente i_{Aq1}, i_{Aq2} wird dann in die Statorströme i_{A1}, i_{A2} der wirkenden Antriebsspulen 7, 8 (oder äquivalent in Spulenspannungen) umgerechnet und die Antriebsspulen 7, 8 werden damit bestromt. Für die Erzeugung einer elektromagnetischen Seitenkraft F_{EMS1}, F_{EMS2} kann ein Flussregler vorgesehen sein, dem ein Sollfluss vorgegeben wird. Aus der Differenz des Sollflusses und eines aktuellen magnetischen Flusses (der beispielsweise gemessen werden kann oder aus anderen Messgrößen abgeleitet werden kann) kann die benötigte seitenkraftbildende Stromkomponente i_{Ad1}, i_{Ad2} berechnet werden, die dann wieder in die Statorströme i_{A1}, i_{A2} der wirkenden Antriebsspulen 7, 8 (oder äquivalent in Spulenspannungen) umgerechnet werden kann. Ist gleichzeitig eine vortriebskraftbildende Stromkomponente i_{Aq1}, i_{Aq2} und eine seitenkraftbildende Stromkomponente i_{Ad1}, i_{Ad2} notwendig, dann wir der resultierende Stromvektor in die benötigten Statorströme i_{A1}, i_{A2} umgerechnet. Im Übergabebereich der Übergabeposition U müssen nun die Sollgrößen (Sollfluss und/oder Sollposition) so vorgegeben werden, dass sich an der gewünschten Seite die gewünschte Wirkung einstellt (nur eine elektromagnetische Seitenkraft F_{EMS1} und/oder nur eine Bremskraft F_{B}). Alternativ könnten der Positionsregler und/oder der Flussregler auf der gewünschten Seite auch deaktiviert werden und stattdessen voreingestellte Statorströme i_{A1} angelegt werden, um die gewünschte Wirkung hervorzurufen (nur eine elektromagnetische Seitenkraft F_{EMS1} und/oder nur eine Bremskraft F_{B}).

## Patentansprüche

1. Verfahren zur Übergabe einer Transporteinheit (Tn) eines Langstatorlinearmotors an einer Übergabeposition (U) von einem ersten Transportabschnitt (Am), mit einer Anzahl von in Bewegungsrichtung (x) der Transporteinheit (Tn) hintereinander angeordneten Antriebsspulen (7, 8) im Bereich der Übergabeposition (U), an einen zweiten Transportabschnitt (An), mit einer Anzahl von in Bewegungsrichtung der Transporteinheit (Tn) hintereinander angeordneten Antriebsspulen (7, 8) im Bereich der Übergabeposition (U), wobei an jeder Seite der Transporteinheit (Tn) Erregungsmagnete (4, 5) angeordnet sind, die zum Bewegen der Transporteinheit (Tn) in die Bewegungsrichtung (x) mit Antriebsspulen (7, 8) im Bereich der Transporteinheit (Tn) zusammenwirken, indem durch Einprägen eines Statorstromes (i_{A1}, i_{A2}) in Antriebsspulen (7, 8) ein elektromagnetisches Feld erzeugt wird, das mit Erregungsmagneten (4, 5) an der Transporteinheit (Tn) zusammenwirkt und in einem Übergabebereich der Übergabeposition (U) an zumindest einer Seite der Transporteinheit (Tn) in zumindest eine Antriebsspule (7, 8) ein Statorstrom (i_{A1}, i_{A2}) eingeprägt wird, der aufgrund einer vortriebskraftbildenden Stromkomponente (i_{Aq1}, i_{Aq2}) und/oder einer seitenkraftbildenden Stromkomponente (i_{Ad1}, i_{Ad2}) des Statorstromes (i_{A1}, i_{A2}) eine Lenkwirkung (L) auf die Transporteinheit (Tn) erzeugt, **dadurch gekennzeichnet, dass** im Übergabebereich zur Erzeugung der Lenkwirkung (L) an einer ersten Seite der Transporteinheit (Tn) in die mit der Transporteinheit (Tn) auf dieser ersten Seite zusammenwirkenden Antriebsspulen (7, 8) ein Statorstrom (i_{A1}, i_{A2}) eingeprägt wird, der entweder nur eine elektromagnetische Seitenkraft (F_{EMS1}, F_{EMS2}) erzeugt oder nur eine Bremskraft (F_{B}) entgegen der Bewegungsrichtung (x) der Transporteinheit (Tn) erzeugt, oder nur eine Kombination daraus.

2. Verfahren nach Anspruch 1, **dadurch gekennzeichnet, dass** im Übergabebereich an einer gegenüberliegenden zweiten Seite der Transporteinheit (Tn) in zumindest eine mit der Transporteinheit (Tn) auf dieser zweite Seite zusammenwirkenden Antriebsspule (7, 8) kein Statorstrom (i_{A1}, i_{A2}) eingeprägt wird.

3. Verfahren nach Anspruch 2, **dadurch gekennzeichnet, dass** in alle mit der Transporteinheit (Tn) auf der zweiten Seite zusammenwirkenden Antriebsspulen (7, 8) kein Statorstrom (i_{A1}, i_{A2}) eingeprägt wird.

4. Verfahren nach Anspruch 1 oder 2, **dadurch gekennzeichnet, dass** im Übergabebereich an einer gegenüberliegenden zweiten Seite der Transporteinheit (Tn) in zumindest eine mit der Transporteinheit (Tn) auf dieser zweiten Seite zusammenwirkende Antriebsspule (7, 8) ein Statorstrom (i_{A1}, i_{A2}) eingeprägt wird, der eine elektromagnetische Seitenkraft (F_{EMS1}, F_{EMS2}) bewirkt.

5. Verfahren nach Anspruch 4, **dadurch gekennzeichnet, dass** in alle mit der Transporteinheit (Tn) auf der zweiten Seite zusammenwirkenden Antriebsspulen (7, 8) ein Statorstrom eingeprägt (i_{A1}, i_{A2}) wird, der eine elektromagnetische Seitenkraft (F_{EMS1}, F_{EMS2}) bewirkt.

6. Verfahren nach einem der Ansprüche 1, 2, 4 oder 5, **dadurch gekennzeichnet, dass** im Übergabebereich an einer gegenüberliegenden zweiten Seite der Transporteinheit (Tn) in zumindest eine mit der Transporteinheit (Tn) auf dieser zweiten Seite zusammenwirkende Antriebsspule (7, 8) ein Statorstrom (i_{A1}, i_{A2}) eingeprägt wird, der eine elektromagnetische Vortriebskraft (F_{EMV1}, F_{EMV2}) bewirkt.

7. Verfahren nach Anspruch 6, **dadurch gekennzeichnet, dass** in alle mit der Transporteinheit (Tn) auf der zweiten Seite zusammenwirkenden Antriebsspulen (7, 8) ein Statorstrom (i_{A1}, i_{A2}) eingeprägt wird, der eine elektromagnetische Vortriebskraft (F_{EMV1}, F_{EMV2}) bewirkt.

## Claims

1. Method for transferring a transport unit (Tn) of a long-stator linear motor at a transfer position (U) from a first transport section (Am), having a number of drive coils (7, 8) arranged one behind the other in the movement direction (x) of the transport unit (Tn) in the area of the transfer position (U), to a second transport section (An), having a number of drive coils (7, 8) arranged one behind the other in the movement direction of the transport unit (Tn) in the area of the transfer position (U), wherein excitation magnets (4, 5) being arranged on each side of the transport unit (Tn), which excitation magnets interact with drive coils (7, 8) in the area of the transport unit (Tn) for moving the transport unit (Tn) in the movement direction (x) by generating an electromagnetic field by impressing a stator current (i_{A1}, i_{A2}) into drive coils (7, 8), which electromagnetic field interacts with excitation magnets (4, 5) on the transport unit (Tn) and wherein a stator current (i_{A1}, i_{A2}) is impressed into at least one drive coil (7, 8) in a transfer area of the transfer position (U) on at least one side of the transport unit (Tn), which stator current generates a steering effect (L) on the transport unit (Tn) due to a propulsive force-forming current component (i_{Aq1}, i_{Aq2}) and/or a lateral force-forming current component (i_{Ad1}, i_{Ad2}) of the stator current (i_{A1}, i_{A2}), **characterized in that** in the transfer area a stator current (i_{A1}, i_{A2}) is impressed into the drive coils (7, 8) interacting with the transport unit (Tn) on a first side for generating the steering effect (L) on this first side of the transport unit (Tn), which stator current either generates only an electromagnetic lateral force (F_{EMS1}, F_{EMS2}) or generates only a braking force (F_{B}) against the movement direction (x) of the transport unit (Tn), or only a combination thereof.

2. Method according to claim 1, **characterized in that** in the transfer area on an opposite second side of the transport unit (Tn) no stator current (i_{A1}, i_{A2}) is impressed into at least one drive coil (7, 8) interacting with the transport unit (Tn) on this second side.

3. Method according to claim 2, **characterized in that** no stator current (i_{A1}, i_{A2}) is impressed into all drive coils (7, 8) interacting with the transport unit (Tn) on the second side.

4. Method according to claim 1 or 2, **characterized in that** in the transfer area on an opposite second side of the transport unit (Tn) a stator current (i_{A1}, i_{A2}) is impressed into at least one drive coil (7, 8) interacting with the transport unit (Tn) on this second side, which stator current causes an electromagnetic lateral force (F_{EMS1}, F_{EMS2}).

5. Method according to claim 4, **characterized in that** a stator current (i_{A1}, i_{A2}) is impressed into all drive coils (7, 8) interacting with the transport unit (Tn) on the second side, which stator current causes an electromagnetic lateral force (F_{EMS1}, F_{EMS2}).

6. Method according to any one of the claims 1, 2, 4 or 5, **characterized in that** in the transfer area on an opposite second side of the transport unit (Tn) a stator current (i_{A1}, i_{A2}) is impressed into at least one drive coil (7, 8) interacting with the transport unit (Tn) on this second side, which stator current causes an electromagnetic propulsive force (F_{EMV1}, F_{EMV2}).

7. Method according to claim 6, **characterized in that** a stator current (i_{A1}, i_{A2}) is impressed into all drive coils (7, 8) interacting with the transport unit (Tn) on the second side, which stator current causes an electromagnetic propulsive force (F_{EMV1}, F_{EMV2}).

## Revendications

1. Procédé de transfert d'une unité de transport (Tn) d'un moteur linéaire à stator long à une position de transfert (U) à partir d'une première section de transport (Am) comportant un certain nombre de bobines d'entraînement (7, 8) disposées en série dans la direction de déplacement (x) de l'unité de transport (Tn) dans la zone de la position de transfert (U), vers une seconde section de transport (An) comportant un certain nombre de bobines d'entraînement (7, 8) disposées en série dans la direction de déplacement de l'unité de transport (Tn) dans la zone de la position de transfert (U), des aimants d'excitation (4, 5) étant disposés de chaque côté de l'unité de transport (Tn), lesquels aimants d'excitation coopèrent avec les bobines d'entraînement (7, 8) dans la zone de l'unité de transport (Tn) pour déplacer l'unité de transport (Tn) dans la direction de déplacement (x) en produisant un champ électromagnétique dans les bobines d'entraînement (7, 8) par l'application d'un courant statorique (i_{A1}, i_{A2}) qui coopère avec les aimants d'excitation (4, 5) au niveau de l'unité de transport (Tn) et en appliquant un courant statorique (i_{A1}, i_{A2}) dans une zone de transfert de la position de transfert (U) sur au moins un côté de l'unité de transport (Tn) dans au moins une bobine d'entraînement (7, 8), lequel courant statorique produit un effet de direction (L) sur l'unité de transport (Tn) en raison d'une composante de courant formant une force de propulsion (i_{Aq1}, i_{Aq2}) et/ou d'une composante de courant formant une force latérale (i_{Ad1}, i_{Ad2}) du courant statorique (i_{A1}, i_{A2}), **caractérisé en ce qu'**un courant statorique (i_{A1}, i_{A2}) est appliqué dans la zone de transfert pour produire l'effet de direction (L) sur un premier côté de l'unité de transport (Tn) dans les bobines d'entraînement (7, 8) coopérant avec l'unité de transport (Tn) sur ledit premier côté, lequel courant statorique ne produit qu'une force latérale électromagnétique (F_{EMS1}, F_{EMS2}) ou ne produit qu'une force de freinage (F_{B}) à l'opposé de la direction de déplacement (x) de l'unité de transport (Tn), ou uniquement une combinaison de celles-ci.

2. Procédé selon la revendication 1, **caractérisé en ce qu'**aucun courant statorique (i_{A1}, i_{A2}) n'est appliqué dans la zone de transfert sur un second côté opposé de l'unité de transport (Tn) dans au moins une bobine d'entraînement (7, 8) coopérant avec l'unité de transport (Tn) sur ledit second côté.

3. Procédé selon la revendication 2, **caractérisé en ce qu'**aucun courant statorique (i_{A1}, i_{A2}) n'est appliqué dans toutes les bobines d'entraînement (7, 8) coopérant avec l'unité de transport (Tn) sur le second côté.

4. Procédé selon la revendication 1 ou 2, **caractérisé en ce qu'un** courant statorique (i_{A1}, i_{A2}) est appliqué dans la zone de transfert sur un second côté opposé de l'unité de transport (Tn) dans au moins une bobine d'entraînement (7, 8) coopérant avec l'unité de transport (Tn) sur ledit second côté, lequel courant statorique induit une force latérale électromagnétique (F_{EMS1}, F_{EMS2}).

5. Procédé selon la revendication 4, **caractérisé en ce qu'un** courant statorique (i_{A1}, i_{A2}) est appliqué dans toutes les bobines d'entraînement (7, 8) coopérant avec l'unité de transport (Tn) sur le second côté, lequel courant statorique induit une force latérale électromagnétique (F_{EMS1}, F_{EMS2}).

6. Procédé selon l'une des revendications 1, 2, 4 ou 5, **caractérisé en ce qu'un** courant statorique (i_{A1}, i_{A2}) est appliqué dans la zone de transfert sur un second côté opposé de l'unité de transport (Tn) dans au moins une bobine d'entraînement (7, 8) coopérant avec l'unité de transport (Tn) sur ledit second côté, lequel courant statorique induit une force de propulsion électromagnétique (F_{EMV1}, F_{EMV2}).

7. Procédé selon la revendication 6, **caractérisé en ce qu'un** courant statorique (i_{A1}, i_{A2}) est appliqué dans toutes les bobines d'entraînement (7, 8) coopérant avec l'unité de transport (Tn) sur le second côté, lequel courant statorique induit une force de propulsion électromagnétique (F_{EMV1}, F_{EMV2}).
